# EUROPÄISCHE PATENTANMELDUNG

(11) **EP 2 763 264 A1**
(43) Veröffentlichungstag der Anmeldung: **06.08.2014**
(21) Anmeldenummer: 13000516.8
(22) Anmeldetag: 01.02.2013
(51) Int. Cl.: H02J 3/12, H02J 3/14, H02J 3/38

(54) **Steuervorrichtung eines intelligenten Stromnetzes**

(71) Anmelder: Kurscheid, Jörg, 95448 Bayreuth (DE)
(72) Erfinder: Kurscheid, Jörg, 95448 Bayreuth (DE)
(74) Vertreter: Grünecker, Kinkeldey, Stockmair & Schwanhäusser

(57) **Zusammenfassung**

Die vorliegende Erfindung betrifft eine Steuervorrichtung zur Steuerung der Leistung eines Stromnetzteilnehmers mit einer Schalteinrichtung, die die Leistung des Stromnetzteilnehmers in Abhängigkeit von dem Zustand des Stromversorgungsnetzes mit einem zufälligen Faktor regelt. Die Steuervorrichtung kann eine mit der Schalteinrichtung integriert ausgebildete Messeinrichtung aufweisen, die Messungen des Zustandes des Stromversorgungsnetzes lokal durchführt. Des Weiteren betrifft die vorliegende Erfindung ein intelligentes Stromnetz mit mehreren solchen Steuervorrichtungen und ein Verfahren zur Steuerung der Leistung eines Stromnetzteilnehmers.

## Beschreibung

Die vorliegende Erfindung betrifft eine Steuervorrichtung und ein Verfahren zur Steuerung der Leistung eines Stromnetzteilnehmers, insbesondere für die Ausbildung eines intelligenten Stromnetzes.

Bisher wird die elektrische Energie weitgehend zentral von Großkraftwerken erzeugt und dem Verbrauch angepasst. Ungleichgewichte zwischen Erzeugung und Verbrauch werden ebenfalls von Großkraftwerken durch Regelenergie ausgeglichen. Die erzeugte Energie wird von hohen zu niedrigen Spannungsebenen übertragen und verteilt. Durch den Zubau von erneuerbaren Energien wird Energie angebotsorientiert und nicht mehr verbrauchsorientiert produziert. Dezentral erzeugte Energie wird vorzugsweise in einem lokalen Stromnetz vor Ort verbraucht und bei Überangebot in darüberliegende Spannungsebenen zurückgespeist.

Durch zunehmende Erzeugung aus erneuerbaren Energien, deren momentane Leistung häufig wetterabhängig ist, steigt der Bedarf an die Regelung der Energie. Gleichzeitig sinkt dadurch die Anzahl der zur Verfügung stehenden Erzeugungskapazität der Großkraftwerke in den Versorgungsnetzen. Die Versorgungsnetze werden durch Rückspeisung, Transite, Fehler bei Prognosen für erneuerbare Energieeinspeisung und starke Erzeugungsschwankungen belastet. Hiervon sind zunehmend das Energiegleichgewicht und damit die Systemstabilität gefährdet.

Intelligente Stromnetze (Smartgrids) sollen dazu beitragen, Verbrauch und Erzeugung in ein Gleichgewicht zu bringen und den erzeugungsnahen Verbrauch zu fördern. Dadurch wird angestrebt, die Stromnetze besser auszulasten und die erzeugte Energie möglichst ohne große Aufwendungen für Zwischenspeicherung direkt vor Ort zu verbrauchen. Bisher vorgestellte Smartgrids basieren auf einer zentralen Steuerung. Hierbei werden Teilnehmer am Smartgrid über Kommunikationswege an eine zentrale Steuerung angeschlossen. Das Verhalten des Teilnehmers wird durch die Kommunikation zwischen zentraler Steuerung und Teilnehmer bestimmt.

Intelligente Stromnetze mit einer zentralen Steuervorrichtung und mehreren Schalteinrichtungen sind beispielsweise aus CA 2 764 501 bekannt. Dabei hat jede Schalteinrichtung einen netzseitigen Stromanschluss und einen teilnehmerseitigen Stromanschluss, an dem die Schalteinrichtung den Energieverbrauch des daran angeschlossenen Verbrauchers an dem teilnehmerseitigen Stromanschluss ermittelt und die Ergebnisse einem zentralen Verwaltungscomputer durch einen bidirektionalen Kommunikationsweg übermittelt, dessen physische Verbindung durch die Stromversorgungsleitung oder andere Medien realisiert werden kann. Durch die Schalteinrichtung kann der zentrale Verwaltungscomputer den Verbraucher entsprechend steuern.

Durch den Einsatz eines solchen Smartgrids entstehen hohe Kosten der Installation und der Kommunikation sowie Sicherheitsrisiken durch Ausfall oder Manipulation der Kommunikation und/oder der zentralen Steuerung.

Der vorliegenden Erfindung liegt das Problem zugrunde, eine wirtschaftliche, skalierbare und zuverlässige Steuervorrichtung anzugeben, die die Systemstabilität der Stromnetze fördert. Ferner soll ein Verfahren zur Steuerung der Leistung eines Stromnetzteilnehmers angegeben werden.

Zur Lösung des obigen Problems wird mit der vorliegenden Erfindung eine Steuervorrichtung für ein intelligentes Stromnetz mit den Merkmalen von Anspruch 1 angegeben.

Um unerwünschte Schwingungen des Stromversorgungsnetzes zu verringern, die bei einer gleichzeitigen Regelung von mehreren erfindungsgemäßen Steuervorrichtungen auftreten können, regelt die Schalteinrichtung gemäß der vorliegenden Erfindung die Leistung, insbesondere die Wirk- und/oder Scheinleistung des mindestens einen Stromnetzteilnehmers mit mindestens einem zufälligen Faktor, insbesondere einer zufälligen zeitlichen Verzögerung und/oder einer Handlungswahrscheinlichkeit in Abhängigkeit von dem Zustand des Stromversorgungsnetzes.

Die statistischen Eigenschaften des Faktors sind vorzugsweise einstellbar und/oder bei der Produktion vorbestimmbar. Mindestens ein Zufallszahlengenerator wird vorzugsweise für die Generierung des zufälligen Faktors verwendet. Der mindestens eine Zufallszahlengenerator kann deterministisch, nicht-deterministisch oder hybrid sein. Bei einem hybriden Zufallszahlengenerator wird ein externer physikalischer Vorgang zur Realisierung eines deterministischen Zufallszahlengenerators einbezogen. Bei mehreren Zufallszahlengeneratoren können auch unterschiedliche Zufallszahlengeneratoren verwendet werden.

Die Regelung kann unmittelbar oder mittelbar erfolgen. Bei einer unmittelbaren Regelung ist die Schalteinrichtung direkt mit einem Stromnetzteilnehmer angeschlossen. Bei einer mittelbaren Regelung regelt die Schalteinrichtung die Leistung des mindestens einen Stromnetzteilnehmers mittels einer externen Steuerung, die zwischen der Schalteinrichtung und dem mindestens einen Stromnetzteilnehmer geschaltet ist. Vorzugsweise sendet die Schalteinrichtung Signale an die externe Steuerung, die anhand der Signale die Leistung des mindestens einen Stromnetzteilnehmers regelt, insbesondere ein- und ausschaltet. Die externe Steuerung kann insbesondere eine Hausautomatisierung sein. Vorzugsweise liegen die Schalteinrichtung und/oder die externe Steuerung ortsnah zu dem Stromnetzteilnehmer und/oder zu der Schalteinrichtung.

Bei Verwendung einer zeitlichen Verzögerung als ein Faktor regelt die Schalteinrichtung erst nach einer zufälligen Verzögerung die Leistung des Stromnetzteilnehmers ab der Erfüllung einer vordefinierten Bedingung zur Regelung der Leistung, insbesondere wenn eine bestimmte Abweichung des Zustandes des Stromversorgungsnetzes von einem Normalzustand erreicht wird. Bei Verwendung einer Handlungswahrscheinlichkeit als ein Faktor ist die Wahrscheinlichkeit der Regelung vorzugsweise umso höher, je größer die Abweichung des Zustandes des Stromversorgungsnetzes von einem Normalzustand ist. Wie ein Stromnetzteilnehmer geregelt wird bzw. ob die Leistung des Stromnetzteilnehmers erhöht oder verringert wird, kann ebenfalls von dem Typ des betroffenen Stromnetzteilnehmers und des Zustands des Stromnetzteilnehmers abhängig gemacht werden. Im einfachsten Fall wird ein Stromnetzteilnehmer zur Regelung von der Schalteinrichtung ein- und ausgeschaltet.

Der Zustand des Stromnetzes kann durch eine Einkanalempfangseinrichtung, insbesondere eine Rundfunkanlage ermittelt werden. Die Einkanalempfangseinrichtung empfängt Informationen, z.B. Preisinformation von einer zentralen Stelle des Stromnetzes, wobei die Schalteinrichtung mit der Einkanalempfangseinrichtung verbunden ist und anhand eines Signals der Einkanalempfangseinrichtung die Leistung des Stromnetzteilnehmers regelt. Gegenüber dem Stand der Technik, wobei alle Steuervorrichtungen gleichzeitig auf eine Änderung, z. B. eine Preissenkung reagieren, wird große Leistungsschwankung in dem Stromnetz durch die gleichmäßige Verteilung aufgrund des zufälligen Faktors verringert.

Diese Steuervorrichtung wird ferner mit Blick auf eine dezentrale Regelung durch eine Messeinrichtung weitergebildet, die mit der Schalteinrichtung integriert ausgebildet ist und Messungen des Zustandes des Stromnetzes lokal durchführt, vorzugsweise an dem netzseitigen Anschluss. Somit kann jede Steuervorrichtung anhand lokaler Messung des Zustandes des Stromnetzes den lokalen Verbrauch bzw. die lokale Erzeugung ortsnah regeln. Die Messeinrichtung und die Schalteinrichtung können in einem Gehäuse, vorzugsweise auf der gleichen Leiterplatte integriert ausgebildet sein. Ferner kann die Steuervorrichtung mit einem Stromnetzteilnehmer, vorzugsweise einem Verbraucher und/oder einem Zwischenspeicher integriert bzw. als eine Einheit ausgebildet sein. Die Messergebnisse der integriert ausgebildeten Messeinrichtung können ebenfalls zur Verifikation des Zustandes des Stromnetzes zusätzlich zu einer von einer zentralen Steuerung bereitgestellten Information über den Zustand verwendet werden.

Des Weiteren kann die Messeinrichtung eine zufällige Messabweichung aufweisen, sodass die Messung durch einen zufälligen Faktor gestört ist. Die Eigenschaft der Messabweichung soll derart gewählt werden, dass unerwünschte Schwingungen des Stromversorgungsnetzes effektiv unterdrückt werden. Vorzugsweise ist ein Grenzwert der Messabweichung der Messeinrichtung größer als 0,5 V, vorzugsweise 5 V, noch bevorzugter 10 V bei einer Spannung und/oder größer als 0,5 mHz, vorzugsweise 5 mHz, noch mehr bevorzugter 10 mHz vorgesehen. Zwischen einem durchschnittlichen Nennwert plus und minus den Grenzwert sollen statistisch 95% der Messwerte liegen.

Ein Stromnetz ist ein elektrisches Netz, das für den Transport und die Verteilung von elektrischer Energie zuständig ist und umfasst sowohl ein Übertragungsnetz, welches für den überregionalen Transport zuständig ist, als auch ein Verteilnetz, welches für die Verteilung der Energie von einem Einspeisepunkt bis zum Verbraucher zuständig ist. Ein Stromnetzteilnehmer kann einen Energieerzeuger, einen Energieverbraucher, einen Energiezwischenspeicher oder eine Kombination daraus sein. Insbesondere kann die erfindungsgemäße Steuervorrichtung für einen Haushalt vorgesehen werden, welcher einen Stromnetzteilnehmer darstellt. Unter einem Stromnetzteilnehmer wird insbesondere eine Einheit verstanden, die über einen gemeinsamen Anschluss an ein Stromversorgungsnetz angeschlossen ist.

Unter einem netzseitigen Anschluss versteht man insbesondere eine physikalische Verbindung zwischen dem Stromnetz und der Messeinrichtung, wobei der Zustand des Stromnetzes über den Anschluss von der Messeinrichtung ermittelt werden kann. Der Anschluss muss nicht zwingend für die Energieversorgung zuständig sein und kann parallel zu einer Versorgungsleitung zwischen dem Stromnetz und dem Stromnetzteilnehmer geschaltet werden. Der teilnehmerseitige Anschluss stellt einen Anschluss dar, über welchen die Schalteinrichtung die Leistung des Stromnetzteilnehmers regeln kann. Dabei kann die Versorgungsleitung des Stromnetzteilnehmers an den teilnehmerseitigen Anschluss angeschlossen werden, sodass die Schalteinrichtung durch Verbindung und Trennung der Versorgungsleitung von der Energieversorgung den Stromnetzteilnehmer ein- und ausschalten kann. An den teilnehmerseitigen Anschluss kann auch lediglich eine Steuerleitung angeschlossen werden, über welche Befehle von der Schalteinrichtung an den Stromnetzteilnehmer zur Regelung seiner elektrischen Leistung abgegeben werden.

Die erfindungsgemäße Steuervorrichtung weist eine Schalteinrichtung auf, die die Leistung des Stromnetzteilnehmers regelt. Vorzugsweise ist die Schalteinrichtung elektrotechnisch zwischen dem netzseitigen und dem teilnehmerseitigen Stromanschluss vorgesehen. Es kann sich bei der Leistung sowohl um Verbrauch als auch um Erzeugung handeln. Somit kann die Schalteinrichtung einen an den teilnehmerseitigen Stromanschluss angeschlossenen Verbraucher oder Erzeuger mit der elektrischen Versorgung verbinden bzw. von der elektrischen Versorgung trennen, um den Verbraucher ein- bzw. auszuschalten. Die Leistung kann auch durch Signale von der Schalteinrichtung zu dem Stromnetzteilnehmer geregelt werden. Die Regelung erfolgt in Abhängigkeit von dem Zustand des Stromversorgungsnetzes, insbesondere von dem lokalen und/oder überregionalen Verhältnis zwischen der erzeugten Energie und der verbrauchten Energie.

Mit Blick auf eine selbständige lokale Regelung ist eine mit der Schalteinrichtung integriert ausgebildete Messeinrichtung vorgesehen, die Messungen des Zustandes des Stromversorgungsnetzes durchführt. Der Zustand eines Stromnetzes unterscheidet sich insbesondere von dem Zustand eines an die Schalteinrichtung angeschlossenen Stromnetzteilnehmers dadurch, dass der Zustand eines Stromnetzes vom Zustand mehrerer anderer an das Stromnetz angeschlossener Stromnetzteilnehmer abhängig ist. Von den Ergebnissen der Messungen, die den Zustand des Stromversorgungsnetzes darstellen, ist die Regelung durch die Schalteinrichtung entsprechend abhängig. Vorzugsweise werden die Messungen des Zustandes des Stromversorgungsnetzes an dem netzseitigen Stromanschluss durchgeführt. Zusätzlich kann auch ein Zustand des zu regelnden Stromnetzteilnehmers, insbesondere die Leistung des Stromnetzteilnehmers an dem teilnehmerseitigen Anschluss überwacht werden, über welchen der Stromnetzteilnehmer vorzugsweise versorgt wird.

Für die Anwendung in einem Wechselspannungsnetz führt die Messeinrichtung nach einer bevorzugten Weiterbildung Messungen der Frequenz und/oder der Spannung und/oder des Phasenwinkels zur Feststellung des Zustandes des Stromversorgungsnetzes, vorzugsweise an dem netzseitigen Stromanschluss, durch. Dadurch können lokaler und/oder überregionaler Zustand des Stromversorgungsnetzes lokal gemessen werden. Beispielsweise ist die Netzfrequenz und deren Abweichung vom Nennwert ein direkter Qualitätsindikator über die Relation der über Erzeuger wie Kraftwerke angebotenen elektrischen Momentanleistung und der Abnahme der elektrischen Momentanleistung durch Verbraucher. Die Spannung des Stromversorgungsnetzes stellt vielmehr einen Indikator über das lokale Verhältnis zwischen Erzeugung und Verbrauch dar. Eine Überspannung kann beispielsweise zu der nicht verbrauchten Rückspeisungsleistung der ortsnah angeschlossenen Solaranlagen oder eines anderen dezentralen Erzeuger zurückgeführt werden. Durch entsprechende Regelung kann die erfindungsgemäße Steuervorrichtung nicht nur zu der überregionalen Systemstabilität beitragen, sondern auch auf die lokalen Änderungen schnell reagieren. Dezentral erzeugte Energie kann auch ortsnah und somit verlustarm verbraucht werden.

Mit Blick auf Schutz gegen Störung und Sicherheitsrisiken der Kommunikationswege und/oder einer mehrere Schalteinrichtungen befehlenden zentralen Steuerung regelt die Schalteinrichtung gemäß einer weiteren bevorzugten Ausbildung die Leistung des Stromnetzteilnehmers selbstständig. Die selbstständige Regelung schließt eine zentrale Steuerung im Prinzip nicht aus und soll mindestens im Notfall die minimal erwünschte Funktion gewährleisten, z. B. wenn die zentrale Steuerung versagt oder die Kommunikationswege zwischen der zentralen Steuerung und der Schalteinrichtung gestört sind. Vorzugsweise regelt die Schalteinrichtung die Leistung des Stromnetzteilnehmers völlig dezentral und selbständig, sodass auf eine zentrale Steuerung komplett verzichtet werden kann.

Mit ihrem nebengeordneten Aspekt schlägt die vorliegende Erfindung zur Lösung des obigen Problems ein intelligentes Stromnetz mit mehreren erfindungsgemäßen Steuervorrichtungen vor. Mit Blick auf eine gleichmäßige Regelung in dem intelligenten Stromnetz können die Steuervorrichtungen mit bekannten Methoden zur Synchronisation paralleler Prozesse koordiniert werden. Die Schalteinrichtungen der Steuervorrichtungen können die Leistung des Stromnetzteilnehmers mit einem zufälligen Faktor regeln. Alternativ oder parallel dazu können ein oder mehrere Parameter der Regelung und/oder Messung bei der Produktion der Steuervorrichtungen zur gleichmäßigen Regelung unterschiedlich festgelegt sein.

Das intelligente Stromnetz kann eine Vielzahl von Stromnetzteilnehmem umfassen, die jeweils durch eine erfindungsgemäße Steuervorrichtung geregelt sind, vorzugsweise jeweils unter Zwischenschaltung einer erfindungsgemäßen Steuervorrichtung mit dem versorgenden Stromnetz verbunden sind. Ein oder mehrere Endverbraucher, insbesondere Haushalte, die einen oder mehrere Stromnetzteilnehmer mit erfindungsgemäßen Steuervorrichtungen aufweisen, können zur Ausbildung eines lokalen intelligenten Stromnetzes an einen einem Einspeisetrafo nachgeschalteten Strang angeschlossen werden. Wenn die Energie erzeugenden Stromnetzteilnehmer mehr Energie in den Strang zurückspeisen, schalten die Steuervorrichtungen Energie verbrauchende, lokale Stromnetzteilnehmer ein, sodass die Energie effizient lokal verbraucht werden und eine Rückspeisung in das übergelagerte Netz durch den Einspeisetrafo verringert wird. Aufgrund der Skalierbarkeit der Lösung, die auch innerhalb eines lokalen Stromnetzes implementierbar ist, können Umbaumaßnahmen lokal und unabhängig von einem dem lokalen Stromnetz überlagerten Stromnetz durchgeführt werden.

Die Parameter können gemäß einer bevorzugten Weiterbildung insbesondere Verzögerungszeit der Schalteinrichtung, Messzyklus und/oder Messabweichung der Messeinrichtung umfassen. In dem Fall, dass die Verzögerungszeit der Schalteinrichtung als ein Parameter verwendet ist, schaltet jede Schalteinrichtung in dem intelligenten Stromnetz nach einer bestimmten Verzögerungszeit. Aber jede Schalteinrichtung weist eine andere, vorzugsweise zufällige Verzögerungszeit, einen anderen Messzyklus und/oder eine andere Messabweichung auf, sodass nicht alle Schalteinrichtungen gleichzeitig schalten. Die Messabweichung ist vorzugsweise eine zufällige systematische Messabweichung, die durch Werkeinstellung festgelegt ist und die zu einer einseitigen Abweichung der echten Werte von den von der Messeinrichtung gemessenen Werten führt. Folglich weist das gesamte intelligente Stromnetz ein zeitlich relativ gleichmäßig verteiltes Regelverhalten auf.

Mit Blick auf die Sicherheit und die Robustheit sind die Steuervorrichtungen des intelligenten Stromnetzes gemäß einer bevorzugten Weiterbildung unabhängig von einer zentralen Steuerung. Die Steuervorrichtungen messen den Zustand des Stromnetzes lokal und regeln die Leistung des Stromnetzteilnehmers selbstständig, auch mangels eines Befehls einer zentralen Steuerung, oder wenn die Kommunikationswege zwischen der zentralen Steuerung und den Steuervorrichtungen gestört sind und/oder die zentrale Steuerung funktionsunfähig ausfällt. Vorzugsweise kann auf eine zentrale Steuervorrichtung vollständig verzichtet werden.

Ferner schlägt die vorliegende Erfindung zur Lösung des obigen Problems ein Verfahren zur Steuerung der Leistung eines Stromnetzteilnehmers vor, vorzugsweise mit einer erfindungsgemäßen Steuervorrichtung und/oder in einem erfindungsgemäßen intelligenten Stromnetz. Das Verfahren zur Steuerung der Leistung eines Stromnetzteilnehmers umfasst einen Regelschritt, in dem die Leistung des Stromnetzteilnehmers geregelt wird, wobei der Regelschritt einem Zufallsschritt nachgeschaltet wird, in dem der Übergang zu dem Regelschritt und/oder die Regelung in dem Regelschritt durch einen Zufallswert beeinflusst werden.

Ferner wird das Verfahren durch einen Messschritt weitergebildet, in dem der Zustand eines Stromnetzes, vorzugsweise an welches der Stromnetzteilnehmer über einen netzseitigen Anschluss angeschlossen ist, durch eine Messeinrichtung gemessen wird, und die Messung in dem Messschritt an dem netzseitigen Anschluss durchgeführt wird.

In dem Messschritt wird der Zustand eines Stromnetzes, vorzugsweise Spannung und/oder Frequenz und/oder Phasenwinkel eines Wechselspannungsnetzes gemessen. Zusätzlich hierzu kann auch die Leistung des Stromnetzteilnehmers durch eine Messeinrichtung gemessen werden. In dem Regelschritt wird die Leistung des Stromnetzteilnehmers geregelt, vorzugsweise in Abhängigkeit von dem Zustand des Stromnetzes. Dabei geht der Messschritt in den Regelschritt bei einer Abweichung des Zustandes des Stromnetzes von einem Normalwert über.

Das Verfahren wird mit Blick auf eine dezentrale Messung und Regelung dadurch weitergebildet, dass die Messung in dem Messschritt an dem netzseitigen Anschluss durchgeführt wird. Somit erfolgt die Regelung des Stromnetzteilnehmers unmittelbar in Abhängigkeit von dem lokalen und/oder überregionalen Zustand des Stromnetzes, welcher lokal, vorzugsweise an dem netzseitigen Anschluss gemessen wird. Folglich kann die Regelung auf lokale Ereignisse der Energieerzeugung und des Energieverbrauchs schneller reagieren, die effizient ortsnah kompensiert werden können.

Mit Blick auf eine gleichmäßig verteilte Regelung wird der Regelschritt nach einer bevorzugten Weiterbildung einem Zufallsschritt nachgeschaltet. In dem Zufallsschritt werden der Übergang zu dem Regelschritt und/oder die Regelung in dem Regelschritt durch einen Zufallswert beeinflusst.

Gemäß einer bevorzugten Ausgestaltung bestimmt eine Schaltwahrscheinlichkeit als der Zufallswert in dem Zufallsschritt, ob der Zufallsschritt in den Regelschritt oder stattdessen in den Messschritt übergeht. Ferner kann der Zufallsschritt nach einer zufälligen Verzögerungszeit in den Regelschritt übergehen. Vorzugsweise wird die Leistung des Stromteilnehmers erst dann in dem Regelschritt geregelt, wenn die Abweichung des Zustandes des Stromnetzes von dem Normalwert durch erneute Messung bestätigt wurde.

Weitere Einzelheiten und Vorteile der vorliegenden Erfindung ergeben sich aus der nachfolgenden Beschreibung von Ausführungsbeispielen in Verbindung mit der Zeichnung.

In dieser zeigen:
- Figur 1: schematische Darstellung einer Steuervorrichtung mit Stromnetzteilnehmern;
- Figur 2: schematische Darstellung eines lokalen intelligenten Stromnetzes mit Hausanschlüssen;
- Figur 3: Flussdiagramm des Verfahrens gemäß einem ersten Ausführungsbeispiel;
- Figur 4: Flussdiagramm des Verfahrens gemäß einem zweiten Ausführungsbeispiel;
- Figur 5: Flussdiagramm des Verfahrens gemäß einem dritten Ausführungsbeispiel; und
- Figur 6: Kumulierte Leistungsaufnahme aller Teilnehmer in Abhängigkeit vom Frequenzverlauf in einer Simulation.

In den Figuren werden für identische oder vergleichbare Komponenten dieselben Bezugszeichen verwendet.

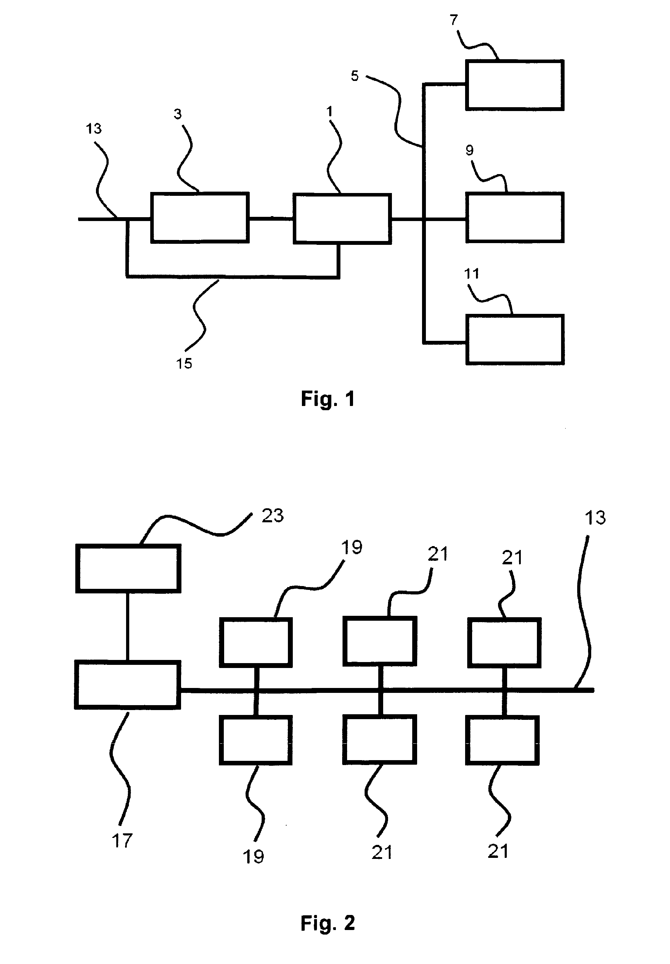

Fig. 1 zeigt schematisch eine Steuervorrichtung 1, 3, 5 für einen Haushalt mit drei Endgeräten 7, 9, 11 als Stromnetzteilnehmer. Über einen Hausanschluss 3 ist eine Schalteinrichtung 1 der Steuervorrichtung 1, 3, 5 an ein Wechselspannungsnetz 13 angeschlossen.

Ferner verfügt eine mit der Schalteinrichtung 1 integriert ausgebildete Messeinrichtung über eine Messleitung 15 zur Ermittelung der Spannung und der Frequenz des Wechselspannungsnetzes 13. Die Messleitung 15 und der Hausanschluss 3 bilden zusammen den netzseitigen Stromanschluss aus. Die Schalt- und Messeinrichtung 1 ist mit den Endgeräten 7, 9, 11, z. B. einem Kühlschrank 7, einer Solaranlage 9, und/oder einem Speicher 11 derart über den teilnehmerseitigen Anschluss 5 verbunden, dass die Schalteinrichtung die Leistung der Endgeräte regeln kann. Somit kann die Schalteinrichtung 1 den Verbraucher 7 ein- und ausschalten. Ferner ist die Schalteinrichtung 1 in der Lage, zu bestimmen, ob der Speicher 11 elektrische Energie vom Wechselspannungsnetz 13 abnimmt oder elektrische Energie in das Wechselspannungsnetz 13 zurückspeist.

Wie Fig. 2 verdeutlicht, bilden mehrere Haushalte 19, 21 mit Steuervorrichtungen ein lokales intelligentes Stromnetz 13 aus, welches von einem spannungsgeregelten Einspeisetrafo 17 bis zu den Haushalten 19, 21 reicht. Der Einspeisetrafo 17 ist mit einem überlagerten Hochspannungsnetz 23 verbunden, aus welchem Energie im Normalfall in das lokale intelligente Stromnetz 13 eingespeist wird. Einige der Haushalte 21 weisen Solaranlagen auf, sodass Überspannung in dem lokalen intelligenten Stromnetz 15 entsteht, wenn die Energieproduktion den Verbrauch des gesamten lokalen Stromnetzes 13 übersteigt. Aufgrund der Überspeisung muss ein Teil der Energie nach Stand der Technik über den Einspeisetrafo 17 in das überlagerte Hochspannungsnetz 23 zurückgespeist werden. Solche Rückspeisung kann zur Überspannung führen, die die Lebensdauer des Einspeisetrafos 17 verkürzt. Der Einspeisetrafo 17 kann durch hohe Rückspeisung überlastet werden. Das erfindungsgemäße lokale intelligente Stromnetz verfügt über erfindungsgemäße Steuervorrichtungen, die bei einer Überspannung in dem lokalen intelligenten Stromnetz 13 weitere lokale Verbraucher einschalten, um den Energieüberschuss effizient lokal zu verbrauchen und den Einspeisetrafo 17 zu schonen. Ferner können die Steuervorrichtungen die Solaranlagen mit Blick auf elektrische Sicherheit vollständig oder teilweise ausschalten, falls ein vorbestimmter Grenzwert der Überspannung erreicht wird.

Es wird keine zentrale Steuerung oder Telekommunikation über die Leitung des Stromnetzes oder andere Medien benötigt. Ein teilweiser Ausfall führt lediglich zur Begrenzung in der Regelungskapazität, aber nicht zum kompletten Versagen der Regelung.

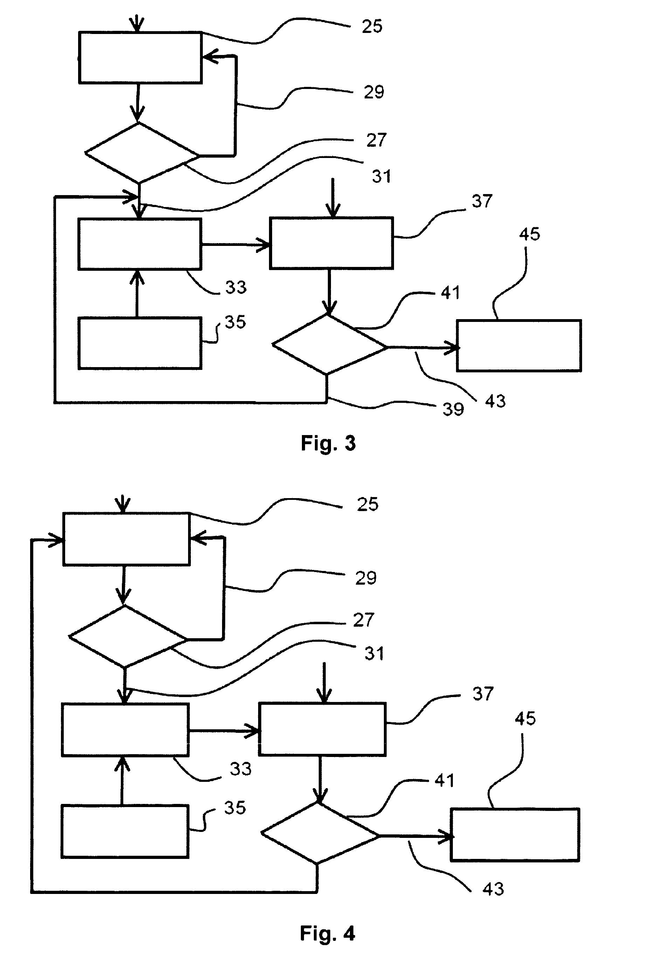

In der Fig. 3 ist ein Flussdiagram des Verfahrens gemäß einem ersten Ausführungsbeispiel für die Bestimmung der zufälligen Verzögerung für einen Verbraucher ohne Reset bei Normalisierung der Frequenz dargestellt. Zunächst wird die tatsächliche Frequenz des Stromnetzes mit einer Normalfrequenz von 50 Hz in einem ersten Messschritt 25 gemessen. Nach der Messung wird die Abweichung der gemessenen Frequenz von der Normalfrequenz in einem ersten Vergleichsschritt 27 festgestellt. Eine Frequenz von weniger als 50,01 Hz und mehr als 49,99 Hz wird als normal eingestuft. Dies entspricht einer Schaltgrenze von 10 mHz. Andernfalls wird der Zustand des Stromnetzes je nach Zeichen der Abweichung als Überfrequenz bzw. Unterfrequenz bewertet. Bei einer Frequenz im Normalbereich geht der Zustand der Steuervorrichtung von dem ersten Vergleichsschritt 27 über den Pfad 29 in den ersten Messschritt 25 zurück, sodass der Messschritt 25 in einem bestimmten Zyklus wiederholt wird.

Bei einer Überfrequenz oder einer Unterfrequenz, geht der Zustand von dem ersten Vergleichsschritt 27 über den Pfad 31 zu einem Verzögerungsschritt 33 über. Ein Zufallsgenerator 35 generiert eine zufällige Verzögerungszeit, um welche der Verzögerungsschritt 33 das Verfahren verzögert werden soll. Die Verzögerungszeit hat eine lineare Verteilung von 0 Sekunden bis zu einer maximalen Verzögerungszeit von 1000 Sekunden. Die Verzögerungszeit wird bei Über- bzw. Unterfrequenz reduziert. Nach dem Ablauf der Verzögerungszeit geht der Zustand von dem Verzögerungsschritt 33 zu einem zweiten Messschritt 37 über, wobei ein Messwert der Frequenz erneut von der Messeinrichtung eingelesen wird. Anhand des neuen Messwertes wird der Zustand des Stromnetzes erneut in einem zweiten Vergleichsschritt 41 ermittelt, um die Überfrequenz bzw. die Unterfrequenz zu bestätigen. Durch die Warteschleife 39, welche von dem zweiten Vergleichsschritt 41 zu dem Verzögerungsschritt 33 zurückgeführt, schaltet die Steuerrichtung erst bei einer Bestätigung 43 der Überfrequenz bzw. Unterfrequenz den Verbraucher in einem weiteren Regelschritt 45 ein bzw. aus.

Ein weiteres Verfahren gemäß dem zweiten Ausführungsbeispiel ist mit Fig. 4 verdeutlicht. Der Unterschied zu dem zuvor beschriebenen Beispiel besteht lediglich darin, dass der Zustand der Steuervorrichtung bei einer fehlenden Bestätigung der Über- bzw. Unterfrequenz von dem zweiten Vergleichsschritt 41 in den ersten Messschritt 25 statt in den Verzögerungsschritt 33 übergeht.

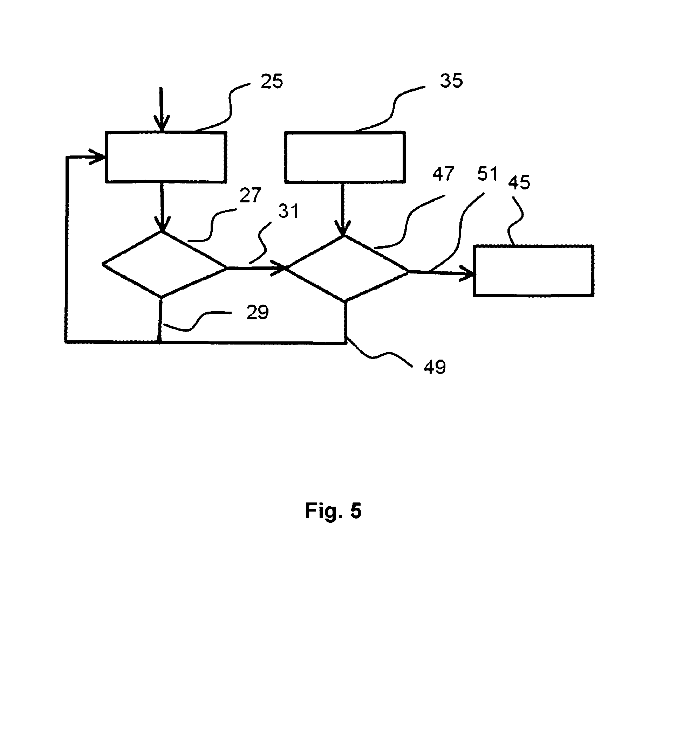

Alternativ zu den Verfahren mit einem Verzögerungsschritt ist ein Verfahren gemäß einem dritten Ausführungsbeispiel in der Fig. 5 dargestellt, wobei eine zufällige Schaltwahrscheinlichkeit den Übergang zu dem Regelschritt 45 bestimmt. Das Verfahren umfasst ebenfalls einen ersten Messschritt 25, einen ersten Vergleichsschritt 27 und den Pfad 29, über welchen der Zustand der Steuervorrichtung bei einer normalen Frequenz von dem ersten Vergleichsschritt 27 zu dem ersten Messschritt 25 zurückgeführt wird.

Statt zu einem Verzögerungsschritt wird der Zustand der Steuervorrichtung von dem ersten Vergleichsschritt 27 bei einer Über- bzw. Unterfrequenz über den Pfad 31 zu einem zweiten Vergleichsschritt 47 geführt, wobei der Zustand von dem zweiten Vergleichsschritt 47 anhand einer durch einen Zufallsgenerator 35 generierten Zufallszahl mit einer Wahrscheinlichkeit von 50% über den Pfad 51 zu dem Regelschritt 45 übergeht. Andernfalls geht der Zustand über den Pfad 49 zu dem ersten Messschritt 25 über.

Wenn z. B. alle Teilnehmer Verbraucher darstellen und anfänglich ausgeschaltet sind, werden bei einer Einschaltwahrscheinlichkeit von 50% und einer Überfrequenz in einem ersten Zyklus statistisch gesehen nur die Hälfte der Teilnehmer eingeschaltet. Falls die Überfrequenz sich nicht verbessert hat, wird die Hälfte von der noch nicht eingeschalteten Hälfte der Teilnehmer, also 25% aller Teilnehmer in einem zweiten Zyklus eingeschaltet. Mit diesem Verfahren sind bereits 75% der Teilnehmer in zwei Zyklen eingeschaltet, sodass das gesamte System deutlich schneller geregelt werden kann, im Vergleich mit den obigen Verfahren mit einer linearen zufälligen Verzögerungszeit.

Alle obigen Vergleichsschritte können auch durch Kombination mit weiteren Parametern erweitert werden. Insbesondere eignet sich die Spannung als eine Leitgröße des lokalen Zustands des Stromnetzes, während die Frequenz eine Leitgröße des gesamten Zustands des Stromnetzes darstellt. Die Spannung wird höher, wenn die Energieerzeugung in dem lokalen Stromnetz nicht ausreichend lokal verbraucht wird. Die Frequenz wird höher, wenn die gesamte Energieerzeugung in dem Stromnetz mehr als der Verbrauch in dem gesamten Stromnetz ist. Die Frequenz sinkt, wenn zu wenig Erzeugung einem zu hohen Verbrauch gegenübersteht.

Gemäß einem weiteren Ausführungsbeispiel wird in jedem der Vergleichsschritte mit kombinierten Leitgrößen aus der Spannung und der Frequenz entschieden. Wie bereits erläutert, wird der lokale Zustand anhand der Spannung, und der überregionale Zustand anhand der Frequenz festgestellt. Die Leistung eines Teilnehmers wird nur durch Regelung verändert, wenn sowohl der lokale, als auch der überregionale Zustand die Änderung zulassen. Beispielsweise kann die Verbrauchsleistung erhöht werden, wenn die Spannung höher als eine obere Spannungsgrenze ist (Überspannung) und die Frequenz nicht niedriger als eine niedrige Frequenzgrenze ist (keine Unterfrequenz). Anhand der Überspannung kann festgestellt werden, dass nicht verbrauchte Energie lokal erzeugt wird. Eine Unterfrequenz würde bedeuten, dass die Energie von dem überlagerten überregionalen Stromnetz benötigt würde. In diesem Fall wäre die Erhöhung der lokalen Verbrauchsleistung eine unerwünschte Belastung des überlagerten Stromnetzes. Aus diesem Grund ist die Unterfrequenz vor der Erhöhung der Verbrauchsleistung auszuschließen. Ein Verbraucher darf ferner eingeschaltet werden, wenn die Frequenz höher als eine obere Frequenzgrenze ist (Überfrequenz) und die Spannung nicht niedriger als eine niedrige Spannungsgrenze ist (keine Unterspannung). In diesem Fall wird überregional mehr Energie erzeugt als verbraucht, was zu der Überfrequenz führt. Jedoch darf ein Verbraucher nicht eingeschaltet werden, wo ein lokaler Engpass anhand einer Unterspannung feststellbar ist. Bei der Reduktion der Verbrauchsleistung sowie der Regelung eines Energieerzeugers oder eines Speichers ist das Verfahren analog anzuwenden.

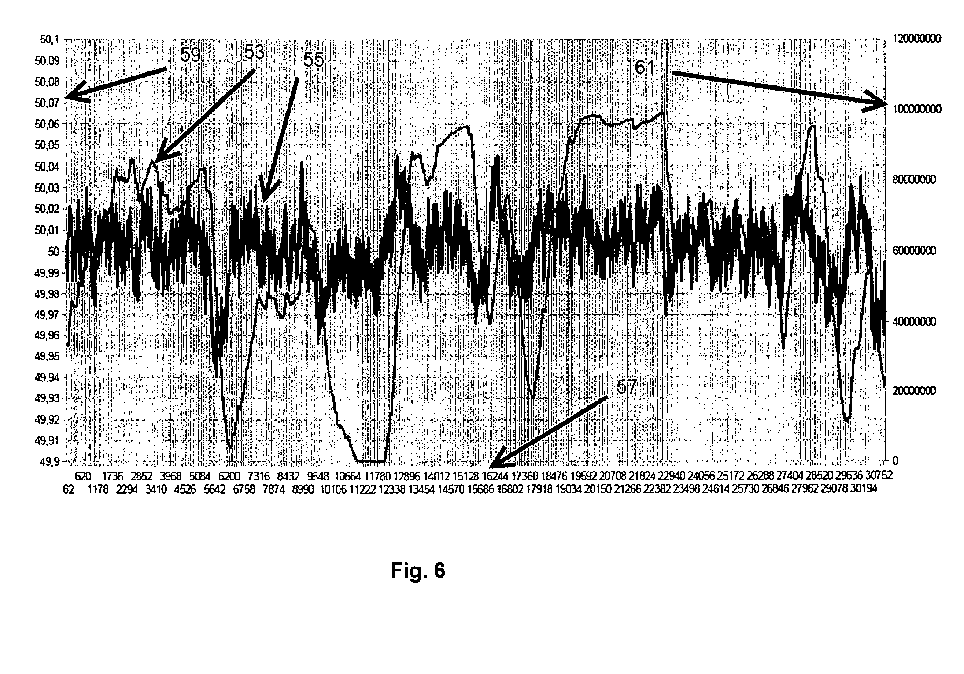

Fig. 6 zeigt die kumulierte Leistungsaufnahme 53 aller Stromnetzteilnehmer mit einer erfindungsgemäßen Steuervorrichtung in Abhängigkeit vom Frequenzverlauf 55 des Stromnetzes in einer Simulation, wobei alle Teilnehmer Energie-Verbraucher sind und mit dem Verfahren gemäß dem ersten Ausführungsbeispiel geregelt werden. In der Simulation wird die Frequenz als die Leitgröße, d. h. der Indikator des Zustands des Stromnetzes verwendet. Die Anzahl der Teilnehmer beträgt 20.000. Die Gesamtleistung aller Teilnehmer beträgt 100.000 kW. Die Schaltgrenze beträgt wie beschrieben 10 mHz. Die maximale Wartezeit von 1000 Sekunden wird verwendet. Die X-Achse 57 stellt die Zeitachse mit Angaben in Sekunden dar. Die linke Y-Achse 59 zeigt die Frequenz des Frequenzverlaufs in Hz. Die rechte Y-Achse 61 zeigt die kumulierte Leistungsaufnahme in Watt. Daraus ergibt sich, dass die Leistung aller Verbraucher bei einer Über- bzw. Unterfrequenz entsprechend geregelt wird, sodass die Frequenz wieder normalisiert werden kann.

### Bezugszeichenliste

- 1: Schalt- und Messeinrichtung
- 3: Hausanschluss
- 5: teilnehmerseitiger Anschluss
- 7: Kühlschrank
- 9: Solaranlage
- 11: Speicher
- 13: Wechselspannungsnetz / lokales intelligentes Stromnetz
- 15: Messleitung
- 17: Einspeisetrafo
- 19: Haushalt
- 21: Haushalt mit Solaranlagen
- 23: überlagertes Hochspannungsnetz
- 25: erster Messschritt
- 27: erster Vergleichsschritt
- 29, 31: Pfad
- 33: Verzögerungsschritt
- 35: Zufallsgenerator
- 37: zweiter Messschritt
- 39: Warteschleife
- 41: zweiter Vergleichsschritt
- 43: Bestätigung der Über- bzw. Unterfrequenz
- 45: Regelschritt
- 47: zweiter Vergleichsschritt
- 49, 51: Pfad
- 53: kumulierte Leistungsaufnahme
- 55: Frequenzverlauf
- 57: X-Achse
- 59: linke Y-Achse
- 61: rechte Y-Achse

## Patentansprüche

1. Steuervorrichtung zur Steuerung der Leistung eines Stromnetzteilnehmers (7, 9, 11) mit einer Schalteinrichtung (1), die die Leistung des Stromnetzteilnehmers (7, 9, 11) in Abhängigkeit von dem Zustand des Stromversorgungsnetzes (13, 23) regelt, **dadurch gekennzeichnet,**
**dass** die Schalteinrichtung (1) die Leistung des Stromnetzteilnehmers (7, 9, 11) mit einem zufälligen Faktor regelt.

2. Steuervorrichtung nach Anspruch 1, **dadurch gekennzeichnet, dass** der Faktor eine zufällige zeitliche Verzögerung und/oder eine Handlungswahrscheinlichkeit umfasst.

3. Steuervorrichtung nach Anspruch 1 oder 2, **dadurch gekennzeichnet, dass** die Steuervorrichtung einen an einen Stromnetzteilnehmer (7, 9, 11) anschließbaren teilnehmerseitigen Anschluss (5), einen an ein Stromversorgungsnetz (13, 23) anschließbaren netzseitigen Anschluss (3) und eine mit der Schalteinrichtung (1) integriert ausgebildete Messeinrichtung aufweist, die Messungen des Zustandes des Stromversorgungsnetzes (13, 23) durchführt, wobei die Schalteinrichtung die Leistung des Stromnetzteilnehmers (7, 9, 11) über den teilnehmerseitigen Anschluss(5) regelt.

4. Steuervorrichtung nach Anspruch 3, **dadurch gekennzeichnet, dass** das Stromversorgungsnetz ein Wechselspannungsnetz (13) ist und die Messeinrichtung Messungen der Frequenz und/oder der Spannung und/oder des Phasenwinkels zur Feststellung des Zustandes des Wechselspannungsnetzes (13) an dem netzseitigen Anschluss (3) durchführt.

5. Steuervorrichtung nach einem der vorherigen Ansprüche, **dadurch gekennzeichnet, dass** die Schalteinrichtung (1) die Leistung des Stromnetzteilnehmers (7, 9, 11) selbstständig regelt.

6. Intelligentes Stromnetz mit mehreren Steuervorrichtungen, wobei jede Steuervorrichtung zur Steuerung der Leistung eines Stromnetzteilnehmers (7, 9, 11) mit einer Schalteinrichtung (1), die die Leistung des Stromnetzteilnehmers (7, 9, 11) in Abhängigkeit von dem Zustand des Stromversorgungsnetzes (13, 23) regelt, **dadurch gekennzeichnet, dass** die Schalteinrichtung (1) die Leistung des Stromnetzteilnehmers (7, 9, 11) mit einem zufälligen Faktor regelt, und/oder dass ein Parameter der Regelung und/oder Messung bei der Produktion der Steuervorrichtungen zur gleichmäßigen Regelung unterschiedlich festgelegt ist.

7. Intelligentes Stromnetz nach Anspruch 6, **dadurch gekennzeichnet, dass** der Parameter Verzögerungszeit der Schalteinrichtung (1) und/oder Messzyklus der Messeinrichtung umfasst.

8. Intelligentes Stromnetz nach Anspruch 6 oder 7, **dadurch gekennzeichnet, dass** die Steuervorrichtungen unabhängig von einer zentralen Steuerung sind.

9. Intelligentes Stromnetz nach einem der Ansprüche 6 bis 8, **dadurch gekennzeichnet, dass** mindestens eine der mehreren Steuervorrichtungen eine Steuervorrichtung gemäß einem der Ansprüche 1 bis 5 ist.

10. Verfahren zur Steuerung der Leistung eines Stromnetzteilnehmers mit einem Regelschritt (45), in dem die Leistung des Stromnetzteilnehmers (7, 9, 11) in Abhängigkeit von dem Zustand eines Stromversorgungsnetzes (13, 23) geregelt wird,
**dadurch gekennzeichnet, dass** der Regelschritt (45) einem Zufallsschritt (33, 47) nachgeschaltet wird, in dem der Übergang zu dem Regelschritt (45) und/oder die Regelung in dem Regelschritt (45) durch einen Zufallswert beeinflusst werden.

11. Verfahren nach Anspruch 10, **dadurch gekennzeichnet, dass** ein Messschritt (25) vorgesehen ist, in dem der Zustand eines Stromnetzes (13), an welches der Stromnetzteilnehmer (7, 9, 11) über einen netzseitigen Anschluss (3) angeschlossen ist, durch eine Messeinrichtung gemessen wird, und dass der Messschritt (25) in den Regelschritt (45) übergeht, wenn der Zustand des Stromnetzes (13) von einem Normalwert abweicht.

12. Verfahren nach Anspruch 11, **dadurch gekennzeichnet, dass** eine Schaltwahrscheinlichkeit in dem Zufallsschritt (47) bestimmt, ob der Zufallsschritt in den Regelschritt (45) oder stattdessen in den Messschritt (25) übergeht.

13. Verfahren nach einem der Ansprüche 10 bis 12, **dadurch gekennzeichnet, dass** der Zufallsschritt (33) nach einer zufälligen Verzögerungszeit in den Regelschritt (45) übergeht.

14. Verfahren nach Anspruch 11 oder 12, **dadurch gekennzeichnet, dass** die Leistung des Stromteilnehmers (7, 9, 11) erst dann in dem Regelschritt (45) geregelt wird, wenn die Abweichung des Zustandes des Stromnetzes (13) von dem Normalwert durch erneute Messung (37, 41) bestätigt wurde.

15. Verfahren nach Anspruch 11 oder 12, **dadurch gekennzeichnet, dass** die Messung in dem Messschritt an dem netzseitigen Anschluss (3) durchgeführt wird.
